(19) Europäisches Patentamt
European Patent Office
Office européen des brevets

(11) Numéro de publication : **0 064 441**
**B1**

(12) # FASCICULE DE BREVET EUROPÉEN

(45) Date de publication du fascicule du brevet : **26.09.84**

(51) Int. Cl.$^3$ : **A 01 N 55/04** // (A01N55/04, 31/02)

(21) Numéro de dépôt : **82400705.8**

(22) Date de dépôt : **20.04.82**

(54) **Composition biocide à base de sulfonium et de composés organiques de l'étain.**

(30) Priorité : **27.04.81 FR 8108350**

(43) Date de publication de la demande : **10.11.82 Bulletin 82/45**

(45) Mention de la délivrance du brevet : **26.09.84 Bulletin 84/39**

(84) Etats contractants désignés : **AT CH DE GB LI NL SE**

(56) Documents cités :
**DE-A- 1 642 364**
**FR-A- 2 020 338**
**FR-A- 2 061 766**
**GB-A- 464 330**
**US-A- 2 915 428**

(73) Titulaire : **SOCIETE NATIONALE ELF AQUITAINE**
**Tour Aquitaine**
**F-92400 Courbevoie (FR)**

(72) Inventeur : **Ayglon, Daniel**
**8, rue Victor Hugo**
**F-64110 Jurançon (FR)**
Inventeur : **Hardy, Marie-Christine**
**Quartier Marmouts**
**F-64300 Ortez (FR)**

(74) Mandataire : **Kohn, Armand**
**5, Avenue Foch**
**F-92380 Garches (FR)**

**EP 0 064 441 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

L'invention concerne un procédé pour la destruction ou/et l'inhibition de la croissance de microorganismes ; elle comprend des compositions renfermant des composés de sulfoniums associés à des dérivés organiques de l'étain. Plus particulièrement, l'invention vise des proportions de sulfonium et de dérivés stanniques procurant un effet synergique dans la destruction de microorganismes ou/et l'inhibition de leur croissance. Parmi ses applications les plus importantes, cette invention comprend l'action biocide sur des microorganismes infestant l'eau et notamment les eaux industrielles.

On connaît, à l'heure actuelle, un grand nombre de biocides applicables dans différents domaines. Dans le cas spécial de la désinfection des eaux, dont l'importance est grande tant pour l'industrie que pour la vie en général, on a beaucoup utilisé le chlore, l'ozone, des composés organochlorés, des dérivés organométalliques, des substances phénoliques, des composés du soufre ou de l'azote. Tous ces agents, largement utilisés, présentent des avantages et des inconvénients liés à leurs caractéristiques chimiques et physico-chimiques et à leur spécificité d'action. Aussi, il existe toujours un besoin de biocides susceptibles d'être employés à des doses aussi faibles que possible et présentant un spectre d'action le plus étendu.

Un type de biocides fort utiles, qui rendent des services indéniables dans différents domaines, dont celui des eaux, comprend des composés organo-stanniques. De nombreuses publications ont décrit de tels composés ; c'est le cas par exemple des brevets allemands 1 084 722, 1 109 444 ou brevet US 2 957 785. Cependant, ces substances sont relativement chères ; d'autre part, l'accumulation de dérivés métalliques n'est pas souhaitable généralement. On a essayé d'employer des doses moindres de composé d'étain en associant celui-ci à des ammoniums quaternaires, mais les résultats ont été plutôt décevants : la durée d'inactivation par de tels mélanges, pour de nombreux micro-organismes, est beaucoup plus courte qu'avec des dérivés stanniques et on ne constate guère d'effet de synergie. Il ne semblait donc pas que des progrès fussent possibles par l'association des organo-stanniques avec des agents tensio-actifs.

La présente invention résulte de la constatation imprévisible que, en dépit des résultats peu encourageants sus-indiqués, il est possible d'obtenir un effet synergique d'un biocide organo-stannique avec un autre biocide, si ce dernier contient la fonction sulfonium. Des résultats remarquables ont été obtenus de cette façon, qui conduisent à une forte exaltation du pouvoir biocide avec une économie très appréciable d'étain.

Le nouveau procédé, suivant l'invention, consiste à traiter le milieu, infesté ou infestable par des microorganismes nocifs, conjointement avec un ou plusieurs dérivés organiques de l'étain et au moins un composé sulfonium de formule (I).

Selon les cas et les circonstances, le dérivé de l'étain et celui du sulfonium sont ajoutés simultanément ou séparément au milieu à traiter. Ainsi, peut-on être amené à introduire, dans un certain milieu aqueux, un des deux composés synergisants, dérivé d'étain ou sulfonium, les laisser agir pendant un certain temps et ajouter, ensuite, le second des composés.

Pour les applications simultanées, suivant l'invention, des deux sortes de composants, les dérivés organiques de l'étain peuvent être mélangés avec les composés sulfonium, en solution ou en suspension. La nouvelle composition synergique, suivant l'invention, peut donc être constituée par un mélange pâteux ou bien par une solution dans un solvant approprié, une dispersion ou émulsion aqueuses ou autres. Des émulsions sont particulièrement avantageuses, lorsqu'il s'agit de stériliser des milieux aqueux.

Les compositions suivant l'invention ont des applications très vastes et une utilisation marquante est celle de l'inhibition de la croissance des microorganismes dans l'eau, éventuellement salée et de forte dureté. On sait, en effet, que des dépôts d'origine biologique affectent différents systèmes aqueux, notamment lacs, étangs, rivières, marais, piscines, etc. Il en est de même dans des systèmes industriels tels que circuits de réfrigération, industrie papetière, circuis de réinjection d'eau dans le sous-sol, dans la récupération assistée, dans l'industrie pétrolière. L'accumulation de germes dans les eaux calmes de telles surfaces ou circuits conduit à la détérioration progressive par attaque et corrosion des matériaux en présence ; ainsi, sont corrodés des bois, métaux, ciments, etc. ; d'autre part, il se produit un colmatage des tuyauteries et organes tels que pompes, échangeurs thermiques, vannes et autres, ce qui rend l'exploitation difficile et augmente le coût d'entretien. Or, le procédé suivant l'invention convient bien pour remédier à ces différents inconvénients : sous sa forme préférée, on introduit, dans le milieu aqueux à stériliser, la dose appropriée d'un mélange suivant l'invention, en solution ou en dispersion, les proportions des constituants actifs étant, de préférence, égales ou voisines à celles qui procurent le maximum d'action synergique.

Les composés organiques de l'étain, utiles à la réalisation de l'invention, peuvent être choisis parmi tous les dérivés organiques stanneux ou stanniques doués de propriétés biocides. Plus spécialement, conviennent les composés stanniques dans lesquels 1 à 3 groupes hydrocarbonés sont liés à l'atome d'étain, alors que les valences restantes de celui-ci sont saturées par un métalloïde, le plus souvent oxygène, soufre ou halogène, ou bien par un reste d'un radical hydrocarboné. Ces composés peuvent être représentés par la formule

$$R_nSnZ_{(4-n)}$$

dans laquelle R est un alkyle, alkényle, cyclo-alkyle, cyclo-alkényle, aryle ou alkyl-aryle, de préférence en $C_1$ à $C_{12}$ ; n est un nombre entier de 1 à 3 ; Z représente une valence de métalloïdes, principalement S, O, Cl, Br, I ou F. Particulièrement pratiques sont les oxydes, sulfures et halogénures de trialkyl- ou triaryl-étain. Ce sont notamment des corps $(R_3Sn)_2O$ ; $(R_3Sn)_2S$ ; $R_3SnX$ où X est halogène. Les alkyles R préférés sont en $C_1$ à $C_{12}$, mais ils peuvent être remplacés par un phényle. Z peut être également un alkyle, alkényle, cyclo-alkyle, cyclo-alkényle, aryle, alkyl-aryle, ou le reste d'un acide organique linéaire ou ramifié, cyclo-alkyle, cyclo-alkényle, aryle ou alkyl-aryle ; particulièrement efficace sont l'acétate, le propionate et le benzoate de tributyl-étain $Bu_3SnOCOC_6H_5$ ou « TBTB ».

Les sulfoniums employés sont ceux qui, selon l'art antérieur, notamment brevet allemand 700 847 et BF 810 437 sont décrits comme bactéricides ou fongicides. Ce sont des composés du type

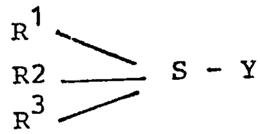

(I)

où $R^1$, $R^2$ et $R^3$ sont des groupes hydrocarbonés, semblables ou différents. Y est un anion notamment un halogène ou un alkyl sulfate.

Bien que les groupes $R^1$ à $R^3$ puissent avoir différentes constitutions, ils sont de préférence des alkyles en $C_8$ à $C_{22}$. Des résultats remarquables sont obtenus lorsque au moins 1 des 3 alkyles, semblables ou différents, a un nombre de carbones de $C_{12}$ à $C_{18}$ ; le maximum d'efficacité est obtenu lorsque $R^2$ est un tétradécyle, $R^1$ et $R^3$ étant des alkyles inférieurs. L'anion qui convient surtout à la pratique de l'invention est le méthosulfate

$$—SO_4CH_3(-)$$

Bien que les effets utiles à la synergie, entre les biocides à base d'étain et ceux qui portent une fonction sulfonium, apparaissent pour toutes proportions substantielles des composés en question, il existe un certain optimum de proportion qu'il y a intérêt à mettre à profit. En général, les meilleurs résultats s'obtiennent avec environ 1 à 3 molécules de sulfonium pour 1 atome de Sn ; les meilleurs résultats sont atteints lorsque ce rapport est voisin de 2, c'est-à-dire lorsqu'il y a 1,5 à 2,5, ou mieux encore 1,8 à 2,2 fonctions sulfonium par atome de Sn. Dans le cas particulier de méthosulfate de tétradécyl-méthyl sulfonium (« SUL ») associé à l'oxyde de tributyl-étain (« TBTO »), ces proportions préférentielles se traduisent approximativement par les limites pondérales de 65 à 75 parties de sulfonium pour respectivement 35 à 25 parties de composés de Sn.

Il est bien entendu qu'en plus des deux sortes de composés définis par la présente invention, c'est-à-dire sulfonium et organo-étain, d'autres composés biologiquement actifs ou non actifs peuvent faire partie de la nouvelle composition suivant l'invention. Ainsi, peut-il être avantageux d'ajouter à la composition un ou plusieurs agents tensio-actifs ioniques ou non ioniques. Parmi ces derniers, les sels d'ammoniums quaternaires sont fort recommandables, parce qu'ils permettent en même temps d'élargir le spectre de l'action biocide du mélange.

Des composés d'ammonium quaternaire à utiliser sont par exemple chlorure de lauryl diméthyl benzyl ammonium ou de octyl diméthyl benzyl ammonium ; bromure de décyl-diméthyl benzyl ammonium, de stéaryl diméthyl benzyl ammonium ou de stéaryl diméthyl éthyl ammonium ; saccharinate de lauryl diméthyl benzyl ammonium ou de linoléyl diéthyl hexyl ammonium, etc.

D'autres adjuvants, de natures diverses, notamment fongicides, peuvent être associés aux compositions de l'invention. Ce sont par exemple des dérivés de la quinoléine tels que sulfate d'orthoxy-quinoléine, des sels de guanidines, en particulier acétate de dodécyl guanidine, la méthyl-oxo-dithioloquinoxaline, des pyrimidines, des thiadiazines, comme par exemple le thiazolyl-benzimide-azole ou la diméthyl-tétrahydrothiadiazine thione, ou autres composés biocides connus.

Afin d'illustrer l'invention, on décrit quelques exemples d'application des nouvelles compositions biocides, synergiques, dans les cas particuliers où le sulfonium est le méthosulfate de tétradécyl-diméthyl-sulfonium.

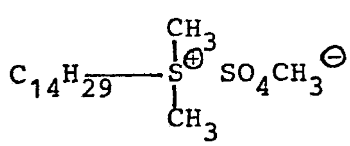

désigné par les lettres SUL, tandis que le dérivé organostannique est l'oxyde de tributyl-étain.

$$[(C_4H_9)_3Sn]_2O$$

appelé le TBTO.

Les essais portent sur l'eau du Gave de Pau qui contient de nombreux microorganismes et qui est largement utilisée par de nombreux industriels pour l'alimentation de leurs circuits de réfrigération. C'est par cette eau que sont ensemencés les milieux nutritifs classiques dans les tubes utilisés dans ces essais.

Le nombre total de germes, trouvé dans l'eau du Gave, se situe entre $10^5$ et $10^7$ par ml. Les microorganismes suivants ont été identifiés dans cette eau.

— Bactéries : Enterobacteriaceae, Pseudomonaceae, Bacteriaceae, Clostridiales, Bacillales, Sporovibrionales
— Algues : Diatomées, Cyanophycees, Chlorophycees
— Champignons : Aspergillus.

Exemple 1

Aux bactéries, contenues dans un milieu de culture peptonée, on ajoute des doses croissantes de substance biocide à étudier. Un tube témoin ne contient pas de biocide. Toutes les trois minutes, on détermine la densité optique du contenu des tubes en culture ; cette opération est effectuée à 30 °C, sous agitation continue, les tubes étant placés dans un biophotomètre. On évalue ainsi la croissance des germes. Le tableau 1, qui se trouve à la page 16, donne les durées d'inactivation, par les composés utilisés, des microorganismes dans les tubes traités comme il vient d'être indiqué ci-dessus. Le biocide donné est d'autant plus efficace que le temps de latence est long et que le taux de croissance est faible ; on admet, généralement, qu'après un temps de latence égal à 48 h, tous les germes sont tués.

Dans le tableau 1 figurent les composés actifs SUL, c'est-à-dire le sulfonium décrit plus haut, employé en solution aqueuse, et le composé stannique TBTO en solution à 10 g/l dans du diméthylformamide.

A titre de comparaison, des essais sont également effectués avec du chlorure d'alkyl-benzyldiméthylammonium, désigné par AMQ

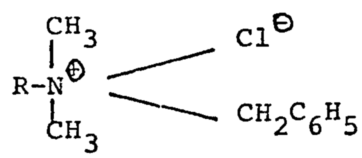

(produit connu dans le commerce sous la dénomination Benzalkonium). Les deux dernières lignes du tableau correspondent à des mélanges de TBTO avec AMQ et de SUL + TBTO + AMQ employés en solution à 10 g/l dans du diméthyl-formamide.

Le diméthylformamide, employé comme solvant, dans les essais qui précèdent, a été trouvé complètement inactif. Pour cela on s'est assuré que le diméthylformamide, appliqué seul à la dose correspondant à celle que contient la solution de TBTO à 70 ppm ne provoque aucune destruction des germes dans les mêmes conditions. On peut donc ne pas tenir compte de sa présence dans les conclusions à tirer du tableau 1.

Les résultats ci-dessus montrent une remarquable activité du mélange 71,4 SUL + 28,6 TBTO qui — comme on le voit — pour une dose de 50 ppm, conduit à une latence, c'est-à-dire inactivation, des microorganismes pendant > de 48 h, ce que l'on n'obtient dans aucun autre des essais effectués. En effet, pour cinq autres mélanges ou produits actifs, la latence > 48 h n'est obtenue qu'à partir de 60 ppm.

On notera que ce meilleur mélange synergique ne comprend qu'une dose de (50 × 28,6) : 100 = 14, 3 ppm de composé stannique TBTO, ce qui représente une économie très sensible d'étain et d'ailleurs également de sulfonium ; en effet, le tableau 1 montre qu'avec du TBTO seul, on aurait le même résultat qu'à partir de 60 ppm et, avec le SUL seul, au-delà de 80 ppm.

Un autre résultat frappant est que l'ammonium quaternaire AMQ seul devrait être employé à la dose de 60 ppm pour donner une inactivation de plus de 48 h, et que son mélange avec TBTO ne donne qu'une inactivation de 15 h pour 70 ppm.

On voit donc que les trois mélanges SUL + TBTO, et surtout le second, apportent des résultats considérablement améliorés pour rapport aux autres biocides essayés.

Exemple 2

Les mêmes produits actifs qu'à l'exemple 1 sont essayés en vue de la détermination des effets de synergie après 24 h. On détermine donc les doses nécessaires pour produire l'inhibition de la flore étudiée en 24 h. Le tableau 2, à la page 17, résume les résultats de ces essais et indique les valeurs des actions synergiques S calculées suivant la méthode comme de critère de synergie.

Critère de synergie

Lorsqu'on mélange deux composés, 1 et 2, ou trois, 1, 2, 3, en vue de leur utilisation conjointe en tant

que biocide, l'action synergique S du mélange s'exprime par

$$(Q'_1/Q_1) + (Q'_2/Q_2) = S_{1-2} \text{ ou } (Q'_1/Q_1) + (Q'_2/Q_2) + (Q'_3/Q_3) = S_{1-2-3}$$

où les symboles Q désignent les doses nécessaires à l'obtention du résultat recherché :

$Q_1$ lorsque le composé 1 est employé seul
$Q'_1$ lorsque le composé 1 est en mélange avec 2
$Q_2$ lorsque le composé 2 est employé seul
$Q'_2$ lorsque le composé 2 est en mélange avec 1
$Q_3$ lorsque le composé 3 est seul
$Q'_3$ lorsque le composé 3 est en mélange avec 1 et 2.

On comprend que des valeurs de S inférieures à 1 signifient qu'il y a synergie entre les composés du mélange ; il y a simple additivité des actions lorsque S = 1 ; quant aux valeurs de S supérieures à 1, elles signifient qu'il y a antagonisme entre les effets des composants du mélange.

La dernière colonne verticale du tableau 2, qui se trouve à la page 17 montre que les trois mélanges SUL + TBTO produisent tous des effets marqués de synergie et c'est encore le mélange moyen, c'est-à-dire SUL 71,4 + TBTO 28,6 qui est, à ce point de vue, le plus efficace, puisque son effet de synergie $S_{(1-2)}$ est égal à 0,55.

Par contre, l'avant dernière ligne horizontale du tableau indique clairement que l'ammonium quaternaire AMQ non seulement ne donne pas de mélange synergique avec le composé de l'étain TBTO, mais produit même un effet antagoniste par rapport à ce dernier, puisque $S_{(2-3)}$ s'élève à 1,16 ; on voit d'ailleurs qu'il faut des doses supérieures à 70 ppm de ce mélange pour arriver à l'inhibition après 24 h.

Un résultat intéressant se dégage de la dernière ligne horizontale du tableau, qui montre que — malgré l'antagonisme entre TBTO et AMQ — un effet synergique peut tout de même être obtenu grâce à l'adjonction de sulfonium. Bien que cet effet $S_{(1-2-3)} = 0{,}76$ soit inférieur à celui du premier mélange SUL 57 + TBTO 43, il est néanmoins intéressant et souligne le caractère imprévu de l'invention. En définitive, des compositions ternaires de sulfonium, et de dérivé organique de l'étain additionnées d'un ammonium quaternaire, rentrent dans le cadre des compositions suivant l'invention.

## Exemple 3

Des déterminations analogues à celles de l'exemple 2 sont effectuées pour une durée de 48 h. Les résultats réunis au tableau 3 (Voir à la page 18) confirment ceux de l'exemple 2 : ils montrent qu'après 48 h l'effet de synergie est obtenu avec les mélanges contenant à la fois du sulfonium et du composé d'étain. Le maximum d'effet synergique S = 0,69 est obtenu avec le mélange à 71,4 % de SUL et 28,6 % de TBTO. Il suffit de 50 ppm de ce mélange optimal pour bloquer le développement des germes durant un temps supérieur à 48 h. Le même effet peut être produit par des mélanges contenant 57 % et 80 % de SUL, à condition d'en utiliser des doses de 60 ppm. Cette dernière dose est également suffisante pour le mélange de la dernière ligne du tableau, qui correspond à une composition renfermant autant d'ammonium quaternaire AMQ que de sulfonium ; cependant, dans ce dernier cas, S atteint 0,92, ce qui signifie que l'effet de synergie est assez faible.

En ce qui concerne le mélange sans SUL, composé seulement de TBTO et de AMQ, il en faut plus de 70 ppm et l'activité du biocide est diminuée : il n'y a pas de synergie, puisque S = 1,16.

## Exemple 4

Une eau de rivière, additionnée de doses croissantes de substances biocides, est passée sur filtres aux mailles de 0,2 microns. Ces filtres qui retiennent les bactéries sont ensuite mis en culture sur milieux standards gélosés, pour germes totaux, suivant la méthode de Sartorius.

Les mêmes composés SUL et TBTO sont utilisés comme dans les exemples précédents, le TBTO étant en solution dans du méthanol. D'une part ces composés sont essayés seuls et dans l'eau en mélange : dans ce dernier cas, chacun des constituants est introduit séparément dans l'eau à étudier.

L'eau de rivière utilisée renferme $10^5$ de germes par ml. Après 48 h de contact entre le biocide et l'eau, et ensuite 48 h de culture, on trouve les pourcent de destruction suivants avec les différents biocides essayés.

| | |
|---|---|
| 30 ppm de SUL | 99,99 % |
| 20 ppm de SUL | 99,90 % |
| 100 ppm de TBTO | 99 % |
| 10 ppm de mélange 71,4 SUL + 28,6 TBTO | 99,90 % |

On s'était assuré que le méthanol, à la dose correspondant à celle que contient la solution de TBTO à 150 ppm, ne provoque aucune destruction des germes.

On voit ainsi que le mélange SUL + TBTO a une efficacité hautement supérieure à celle de ces agents pris séparément, puisqu'il permet la destruction pratiquement complète dans l'eau avec 10 ppm seulement, alors qu'il faut des doses nettement plus élevées de chacun de ces constituants pris séparément.

En rapprochant ces résultats de ceux des tableaux 2 et 3, on peut constater que le TBTO est un biocide de contact pour les germes présents dans l'eau, qu'il inhibe leur croissance, mais ne provoque pas nécessairement leur destruction. A l'inverse, le SUL a un effet destructeur plus marqué, mais nécessite des doses plus fortes pour inhiber la totalité des germes. L'utilisation de ces deux composés conjointement permet de bénéficier de l'addition des deux effets biocides.

Le présent exemple 4 montre également que l'action synergique des produits utilisés n'est pas modifiée du fait de l'introduction séparée de SUL et TBTO : cela confirme l'efficacité de la variante du procédé suivant l'invention, qui consiste à appliquer successivement, au milieu à traiter, les différents constituants de la composition synergique. On constate en outre que divers solvants peuvent être employés dans la réalisation de l'invention.

## Exemple 5

Application à une eau de gisement pétrolier

On prépare un mélange de composition pondérale, suivant :

%
5,6 de TBTO
14,0 de SUL
5,6 de chloroforme
19,0 de tensio actif non ionique, à savoir alkyl-phénol éthoxylé
55,8 d'isopropanol.

Ce mélange a la propriété d'être diluable en toute proportion tant avec de l'eau douce qu'avec des eaux salées de diverses salinités, notamment jusqu'à 50 g NaCl/l, ainsi qu'avec des eaux de dureté variable entre 0 et 40° TH.

L'action biocide de cette composition est déterminée par la méthode décrite à propos de l'exemple 1, c'est-à-dire contrôle du développement bactérien par biophotométrie, l'eau des rivières étant ici remplacée par celle d'un gisement, contaminée.

On constate que les substances actives de la composition ci-dessus produisent un effet de synergie biocide.

L'observation de la croissance des germes pendant 48 h montre que les produits SUL et TBTO, appliqués isolément, ne sont pas actifs jusqu'à des fortes doses, notamment 400 ppm pour le TBTO. Par contre, dans les mêmes conditions, la composition décrite plus haut, qui contient ces deux produits actifs à la fois, agit déjà pour une dose de 50 ppm, soit 10 ppm en produits actifs, dont 2,8 ppm de TBTO et 7,2 de SUL. La présence conjointe de ces deux composés se traduit donc par un résultat extraordinairement amélioré.

## Exemple 6

Comme la sensibilité aux toxiques des différents microorganismes peut varier beaucoup selon l'espèce, il est intéressant de déterminer l'activité des produits suivant l'invention vis-à-vis de quelques espèces prises individuellement.

On a donc étudié les doses nécessaires pour la destruction, séparément, des bactéries Gram +, Gram − et champignons. Les espèces typiques, soumises aux essais, ont été :

— Bacillus subtilis (G+), désigné ci-après par « SUBTILIS »
— Pseudomona aeroginosa (G−) appelé plus loin « PSEUDOMONAS »
— Aspergillus niger (Champignon) noté plus loin « ASPERGILLUS »

En plus des composés SUL et TBTO des exemples précédents, on a expérimenté le benzoate de tributyl étain $(C_4H_9)_3SnOCOC_6H_5$, désigné par les initiales TBTO dans le tableau 4 qui se trouve à la page 19.

Les mélanges SUL-TBTO et SUL-TBTB sont employés en solution à 20 % dans l'hexylène glycol.

Le tableau 4 relate les résultats de ces essais.

Ce tableau met en évidence la synergie d'effets biocides des mélanges suivant l'invention pour toutes les 3 espèces essayées : en effet, le coefficient S est toujours inférieur ou voisin de 1.

On constate que pour les Aspergillus niger l'action des biocides est complémentaire. Par contre, l'effet de synergie est particulièrement remarquable dans le cas des Pseudomonas qui résistent fortement au composé stannique seul, mais sont sensibles au mélange, suivant l'invention.

Il résulte des essais effectués que les compositions suivant l'invention permettent d'élargir considérablement le spectre d'activité des biocides ; cela confirme d'ailleurs les résultats des exemples précédents, effectués sur des milieux comprenant une flore très complexe.

Exemple 7

Un mélange constitué par 5 % d'oxyde de tributyl étain (TBTO) et 15 % de métho sulfate de tétradécyl diméthyl sulfonium est placé dans un four à 50 °C pendant 4 jours. On mesure par la méthode de chromatographie en couche mince le dibutyl étain qui proviendrait de la décomposition du TBTO. La teneur en dibutyl étain est inférieure à 1 % ce qui montre la stabilité du mélange. Ce mélange présente donc un intérêt tout particulier pour son application dans les circuits de réfrigération.

Tableau 1

Durée d'inactivation en heures

| | Doses ppm | | | | | | | |
|---|---|---|---|---|---|---|---|---|
| Composés actifs | 10 | 20 | 30 | 40 | 50 | 60 | 70 | 80 |
| SUL seul | | | | 15 | 15 | 25 | 25 | >48 |
| TBTO seul | | <5 | <5 | 5 | 5 | >48 | >48 | |
| AMQ seul | 5 | 5 | | 10 | | >48 | | |
| SUL 57%<br>TBTO 43% | | | | 10 | 25 | >48 | >48 | |
| SUL 71,4%<br>TBTO 28,6% | | | | 30 | >48 | >48 | >48 | |
| SUL 80%<br>TBTO 20% | | | | 20 | 40 | >48 | >48 | |
| TBTO 28,6%<br>AMQ 71,4% | | | | 0 | 0 | 0 | 15 | |
| SUL 35,7%<br>TBTO 28,6%<br>AMQ 35,7% | | | | 0 | 25 | >48 | >48 | |

(Voir Tableau 2 p. 8)

Tableau 2

Effets de synergie S pour 24 h

| Composés actifs | Dose ppm | $\frac{Q'_1}{Q_1}$ | $\frac{Q'_2}{Q_2}$ | $\frac{Q'_3}{Q_3}$ | $S_{1-2}, S_{2-3}$ ou $S_{1-2-3}$ |
|---|---|---|---|---|---|
| SUL seul<br>TBTO seul<br>AMQ seul | 80 = $Q_1$<br>60 = $Q_2$<br>60 = $Q_3$ | | | | |
| SUL 57%<br>TBTO 43% | 28,6 = $Q'_1$<br>21,4 = $Q'_2$<br>50,0 | 0,36 | 0,36 | | 0,72 |
| SUL 71,4%<br>TBTO 28,6% | 23,6 = $Q'_1$<br>11,4 = $Q'_2$<br>40,0 | 0,36 | 0,19 | | 0,55 |
| SUL 80%<br>TBTO 20% | 40,0 = $Q'_1$<br>10,0 = $Q'_2$<br>50,0 | 0,50 | 0,17 | | 0,67 |
| TBTO 66,6%<br>AMQ 33,3% | 20 = $Q'_2$<br>50 = $Q'_3$<br>70 | | >0,33 | >0,83 | >1,16 |
| SUL 35,7%<br>TBTO 28,6%<br>AMQ 35,7% | 17,9 = $Q'_1$<br>14,2 = $Q'_2$<br>17,9 = $Q'_3$<br>50,0 | 0,22 | 0,30 | 0,24 | 0,76 |

(Voir Tableau 3 p. 9)

Tableau 3

Effets de synergie pour 48 h

| Composés actifs | Dose ppm | $Q'_1 / Q_1$ | $Q'_2 / Q_2$ | $Q'_3 / Q_3$ | $S_{1-2}$, $S_{2-3}$ ou $S_{1-2-3}$ |
|---|---|---|---|---|---|
| SUL seul<br>TBTO seul<br>AMQ seul | 80 = $Q_1$<br>60 = $Q_2$<br>60 = $Q_3$ | | | | |
| SUL 57%<br>TBTO 43% | 34,3 = $Q'_1$<br>25,7 = $Q'_2$<br>60,0 | 0,43 | 0,43 | | 0,86 |
| SUL 71,4%<br>TBTO 28,6% | 35,7 = $Q'_1$<br>14,3 = $Q'_2$<br>50,0 | 0,45 | 0,24 | | 0,69 |
| SUL 80%<br>TBTO 20% | 48,0 = $Q'_1$<br>12,0 = $Q'_2$<br>60,0 | 0,60 | 0,20 | | 0,80 |
| TBTO 28,6%<br>AMQ 71,4% | >20,0 = $Q'_2$<br>>50,0 = $Q'_3$<br>>70,0 | | >0,33 | >0,83 | >1,16 |
| SUL 35,7%<br>TBTO 28,6%<br>AMQ 35,7% | 21,4 = $Q'_1$<br>17,20= $Q'_2$<br>21,4 = $Q'_3$<br>60,0 | 0,27 | 0,22 | 0,36 | 0,92 |

Tableau 4

| Composés actifs | Dose nécessaire en ppm | | | Coefficient de synergie S | | |
|---|---|---|---|---|---|---|
| | Subtilis | Pseudomonas | Aspergillus | Subtilis | Pseudomonas | Aspergillus |
| SUL seul | 1 | 63 | 6,25 | | | |
| TBTO seul | 0,08 | >500 | 0,05 | | | |
| TBTB seul | 0,31 | >500 | 0,05 | | | |
| SUL 75%<br>TBTO 25% | 0,16 | 63 | 0,2 | 0,62 | <0,8 | ≃ 1 |
| SUL 75%<br>TBTB 25% | 0,31 | 63 | 0,2 | 0,48 | <0,8 | ≃ 1 |

**Revendications**

1. Procédé pour la destruction ou/et l'inhibition de la croissance de microorganismes au moyen de dérivés organiques de l'étain, caractérisé en ce que le milieu contenant les microorganismes à détruire est additionné à la fois d'un dérivé organique de l'étain et d'un composé porteur de la fonction sulfonium répondant à la formule

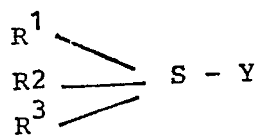

où $R^1$, $R^2$ et $R^3$ sont des alkyles en $C_1$ à $C_{22}$, semblables ou différents, Y étant un anion halogène ou alkyl-sulfurique.

2. Procédé suivant la revendication 1, caractérisé en ce que les deux agents biocides sont introduits simultanément ou successivement dans le milieu à traiter et en particulier dans un milieu aqueux.

3. Composition biocide synergique, pour la réalisation du procédé suivant la revendication 1 ou 2, caractérisée en ce qu'elle contient à la fois un dérivé organique biocide de l'étain et un composé à fonction sulfonium du type $R^1R^2R^3S$—Y défini dans la revendication 1.

4. Composition suivant la revendication 3 dans laquelle l'étain du dérivé organo-stannique est lié à 1 à 3 groupes hydrocarbonés, les valences restantes étant saturées par de l'oxygène, du soufre, de l'halogène ou bien par un reste d'un radical hydrocarboné, caractérisée en ce qu'au moins un des alkyles $R^1$ à $R^3$ du composé sulfonium est en $C_{12}$ à $C_{18}$, un ou les deux autres étant des alkyles inférieurs.

5. Composition suivant la revendication 4, caractérisée en ce que le composé organo-stannique est représenté par la formule

$$R_nSnZ_{(4-n)}$$

dans laquelle le groupe hydrocarboné R est un alkyle, alkényle, cyclo-alkyle, cyclo-alkényle, aryle, ou alkyl-aryle, de préférence en $C_1$ à $C_{12}$ ; n est un nombre entier compris entre 1 et 3, et dans laquelle suivant la revendication 3 ou 4, Z, est un alkyle, alkényle, cyclo-alkyle, cyclo-alkényle, aryle, alkyl-aryle, ou le reste d'un acide organique linéaire ou ramifié, cyclo-alkylique, cyclo-alkénylique, arylique.

6. Composition suivant la revendication 4, caractérisée en ce que le composé organo-stannique est représenté par la formule

$$R_nSnZ_{(4-n)}$$

dans laquelle le groupe hydrocarboné R est un alkyle, alkényle, cyclo-alkyle, cyclo-alkényle, aryle, ou alkyl-aryle, de préférence en $C_1$ à $C_{12}$ ; n est un nombre entier compris entre 1 et 3, et dans laquelle Z représente une valence de métalloïdes S, O, Cl, Br, I ou F.

7. Composition suivant la revendication 3 ou 4, caractérisée en ce que le dérivé organique de l'étain est un composé $(R_3Sn)_2O$ ou/et $(R_3Sn)_2S$ où R désigne un alkyle en $C_1$ à $C_{12}$, le composé étant en particulier l'oxyde de tributyl-étain.

8. Composition suivant la revendication 3 ou 4, caractérisée en ce que le dérivé organique de l'étain est l'acétate, le propionate ou le benzoate de tributylétain, tandis que le composé de sulfonium est le méthosulfate de tétradécyl diméthyl sulfonium.

9. Composition suivant une des revendications 3 à 8, caractérisée en ce que la proportion de composé sulfonium est d'environ 1 à 3 moles et, de préférence, 1,5 à 2,5 moles par atome d'étain présent dans le dérivé organique de ce dernier.

10. Composition suivant une des revendications 3 à 9, caractérisée en ce qu'elle contient également une substance tensio-active en particulier un sel d'ammonium quaternaire.

11. Composition suivant une des revendications 3 à 10, caractérisée en ce qu'elle est sous la forme pâteuse, en solution ou en dispersion dans des solvants, la rendant miscible avec l'eau qui peut avoir une forte dureté et contenir des sels.

12. Application du procédé suivant les revendications 1 et 2, ou des compositions suivant les revendications 3 à 9, caractérisée en ce qu'elle consiste à traiter un système aqueux, naturel ou industriel, en particulier un circuit de réfrigération ou celui de la réinjection d'eau dans le sous-sol, notamment de la récupération assistée dans l'industrie pétrolière.

**Claims**

1. Process for the destruction and/or the inhibition of the growth of microorganisms by means of organic derivatives of tin, characterised in that there are added to the medium containing the

microorganisms to be destroyed both an organic derivative of tin and a compound carrying a sulphonium function corresponding to the formula

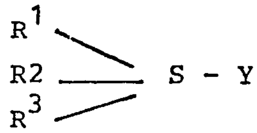

wherein $R^1$, $R^2$ and $R^3$ are the same or different $C_1$ to $C_{22}$ alkyl groups, Y being a halogen or alkylsulphuric anion.

2. Process according to claim 1, characterised in that the two biocidal agents are introduced simultaneously or successively into the medium to be treated and in particular into an aqueous medium.

3. Synergistic biocidal composition for carrying out the process according to claim 1 or 2, characterised by containing both a biocidal organic derivative of tin and a compound having a sulphonium function of the type $R^1R^2R^3S—Y$ as defined in claim 1.

4. Composition according to claim 3, in which the tin of the organo-tin derivative is connected to 1 to 3 hydrocarbon groups, the remaining valences being satisfied by oxygen, sulphur, halogen or by a hydrocarbon group residue, characterised in that at least one of the $R^1$ to $R^3$ alkyl groups of the sulphonium compound contains $C_{12}$ to $C_{18}$, one or both of the two others being lower alkyl groups.

5. Composition according to claim 4, characterised in that the organo-tin compound is represented by the formula

$$R_nSnZ_{(4-n)}$$

in which the hydrocarbon group R is an alkyl, alkenyl, cycloalkyl, cycloalkenyl, aryl or alkylaryl group, preferably containing $C_1$ to $C_{12}$, n being an integral number from 1 to 3, and wherein, according to claim 3 or 4, Z is an alkyl, alkenyl, cycloalkyl, cycloalkenyl, aryl or alkyl-aryl group or a straight or branched, cycloalkyl, cycloalkenyl or aryl organic acid group.

6. Composition according to claim 4, characterised in that the organo-tin compound is represented by the formula

$$R_nSnZ_{(4-n)}$$

in which the hydrocarbon group R is an alkyl, alkenyl, cycloalkyl, cycloalkenyl, aryl or alkylaryl group, preferably containing $C_1$ to $C_{12}$, n being an integral number from 1 to 3, and wherein Z represents a valance of an S, O, Cl, Br, I or F metalloid.

7. Composition according to claim 3 or 4, characterised in that the organic derivative of tin is a compound $(R_3Sn)_2O$ and/or $(R_3Sn)_2S$, where R designates a $C_1$ to $C_{12}$ alkyl group, the compound being in particular tributyl-tin oxide.

8. Composition according to claim 3 or 4, characterised in that the organic derivative of tin is tributyl-tin acetate, propionate or benzoate, whereas the sulphonium compound is tetra-decyldimethyl-sulphonium methosulphate.

9. Composition according to any of claims 3 to 8, characterised in that the proportion of the sulphonium compound is about 1 to 3 moles and, preferably, from 1.5 to 2.5 moles per atom of tin present in the organic derivative of the latter.

10. Composition according to any of claims 3 to 9, characterised in that it also contains a surfactant substance, in particular a quaternary ammonium salt.

11. Composition according to any of claims 3 to 10, characterised in that it is in a paste-like form or in solution or in dispersion in solvents, making it miscible with water which can have a high hardness and can contain salts.

12. Application of the process according to claims 1 and 2 or of the compositions according to claims 3 to 9, characterised in that it consists in treating a natural or industrial aqueous system, in particular a circuit for refrigeration of for the reinjection of water into the ground, particularly for assisted recovery in the petroleum industry.

**Ansprüche**

1. Verfahren zur Zerstörung und/oder Inhibierung des Wachstums vom Mikroorganismen mittels organischer Zinnderivate, dadurch gekennzeichnet, dass das die zu zerstörenden Mikroorganismen enthaltende Milieu zugleich mit einem organischen Zinnderivat und einer die Sulfoniumfunktion tragenden Verbindung der Formel

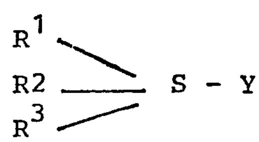

worin $R^1$, $R^2$ und $R^3$ gleiche oder verschiedene $C_1$-$C_{22}$-Alkyle sind, Y ein Halogen- oder Alkylschwefelsäureanion ist, versetzt wird.

2. Verfahren nach Anspruch 1, dadurch gekennzeichnet, dass die beiden bioziden Mittel gleichzeitig oder nacheinander in das zu behandelnde und insbesondere in ein wässriges Milieu eingebracht werden.

3. Synergistische biozide Zusammensetzung zur Durchführung des Verfahrens nach Anspruch 1 oder 2, dadurch gekennzeichnet, dass sie gleichzeitig ein biozides organisches Zinnderivat und eine Verbindung mit Sulfoniumfunktion des im Anspruch 1 definierten Typs $R^1R^2R^3S—Y$ enthält.

4. Zusammensetzung nach Anspruch 3, in der das Zinn des Organostanniderivats an 1 bis 3 Kohlenwasserstoffgruppen gebunden ist, wobei die verbleibenden Wertigkeiten mit Sauerstoff, Schwefel, Halogen oder mit einem Kohlenwasserstoffrest abgesättigt sind, dadurch gekennzeichnet, dass zumindest eines der Alkyle $R^1$ bis $R^3$ der Sulfoniumverbindung mit $C_{12}$ bis $C_{18}$ ist und eines oder die beiden anderen niedrige Alkyle sind.

5. Zusammensetzung nach Anspruch 4, dadurch gekennzeichnet, dass die Organostanniverbindung dargestellt wird durch die Formel

$$R_nSnZ_{(4-n)}$$

worin die Kohlenwasserstoffgruppe R ein Alkyl, Alkenyl, Cycloalkyl, Cycloalkenyl, Aryl oder Alkylaryl, vorzugsweise mit $C_1$ bis $C_{12}$ ist ; n eine ganze Zahl von 1 bis 3 ist, und worin gemäss Anspruch 3 oder 4 Z ein Alkyl, Alkenyl, Cycloalkyl, Cycloalkenyl, Aryl, Alkylaryl oder der Rest einer organischen linearen oder verzweigten Säure, Cycloalkyl-, Cycloalkenyl, Arylsäure ist.

6. Zusammensetzung nach Anspruch 4, dadurch gekennzeichnet, dass die Organostanniverbindung dargestellt wird durch die Formel

$$R_nSnZ_{(4-n)}$$

worin die Kohlenwasserstoffgruppe R ein Alkyl, Alkenyl, Cycloalkyl, Cycloalkenyl, Aryl oder Alkylaryl, vorzugsweise mit $C_1$ bis $C_{12}$ ist ; n eine ganze Zahl von 1 bis 3 ist und worin Z eine Valenz des Metalloids S, O, Cl, Br, I oder F darstellt.

7. Zusammensetzung nach Anspruch 3 oder 4, dadurch gekennzeichnet, dass das organische Zinnderivat eine Verbindung $(R_3Sn)_2O$ oder/und $(R_3Sn)_2$ ist, worin R ein Alkyl mit $C_1$ bis $C_{12}$ bezeichnet, wobei die Verbindung insbesondere Tributylzinnoxid ist.

8. Zusammensetzung nach Anspruch 3 oder 4, dadurch gekennzeichnet, dass das organische Zinnderivat das Acetat, das Propionat oder das Benzoat von Tributylzinn ist, während die Sulfoniumverbindung Tetradecyldimethyl-sulfonium-methosulfat ist.

9. Zusammensetzung nach einem der Ansprüche 3 bis 8, dadurch gekennzeichnet, dass der Anteil der Sulfoniumverbindung etwa 1 bis 3 Mol und vorzugsweise 1,5 bis 2,5 Mol pro Atom Zinn beträgt, das in dem organischen Derivat des letzteren vorhanden ist.

10. Zusammensetzung nach einem der Ansprüche 3 bis 9, dadurch gekennzeichnet, dass sie auch eine oberflächen-aktive Substanz, insbesondere ein quaternäres Ammoniumsalz enthält.

11. Zusammensetzung nach einem der Ansprüche 3 bis 10, dadurch gekennzeichnet, dass sie in pastenartiger Form, in Lösung oder in Dispersion in Lösungsmitteln vorliegt, die sie mit Wasser mischbar machen, das eine grosse Härte aufweisen und Salze enthalten kann.

12. Verwendung des Verfahrens nach den Ansprüchen 1 und 2 oder der Zusammensetzungen nach den Ansprüchen 3 bis 9, dadurch gekennzeichnet, dass sie darin besteht, ein wässriges natürliches oder industrielles System, insbesondere einen Kreislauf einer Kühlung oder den der erneuten Einspritzung von Wasser in den Unterboden, insbesondere bei der unterstützenden Gewinnung in der Erdölindustrie, zu behandeln.